# EUROPEAN PATENT SPECIFICATION

(11) **EP 0 943 532 B1**
(45) Date of publication and mention of the grant of the patent: **07.05.2003**
(21) Application number: 99103773.0
(22) Date of filing: 26.02.1999
(51) Int. Cl.: B62D 33/06

(54) **Cab suspension structure**
Aufhängung für ein Fahrerhaus
Suspension pour cabine de conducteur

(30) Priority: 18.03.1998 JP 6846698
(43) Date of publication of application: 22.09.1999
(73) Proprietor: HINO JIDOSHA KOGYO KABUSHIKI KAISHA, Tokio, 191-8660 (JP)
(72) Inventor: Momiyama, Fujio, Hino-shi, Tokyo 191-8660 (JP); Kobayashi, Noboru, Hino-shi, Tokyo 191-8660 (JP)
(74) Representative: LOUIS, PÖHLAU, LOHRENTZ & SEGETH

(56) References cited:
- US-A- 3 944 017
- US-A- 5 398 774

## Description

### (Field of the Invention)

The present invention relates to a cab suspension structure which prevents pitching of a cab to a chassis.

### (Prior Art)

Shown in Fig. 5 is a conventional cab suspension structure capable of tilting a cabs, e.g. US 3 944 017 A.

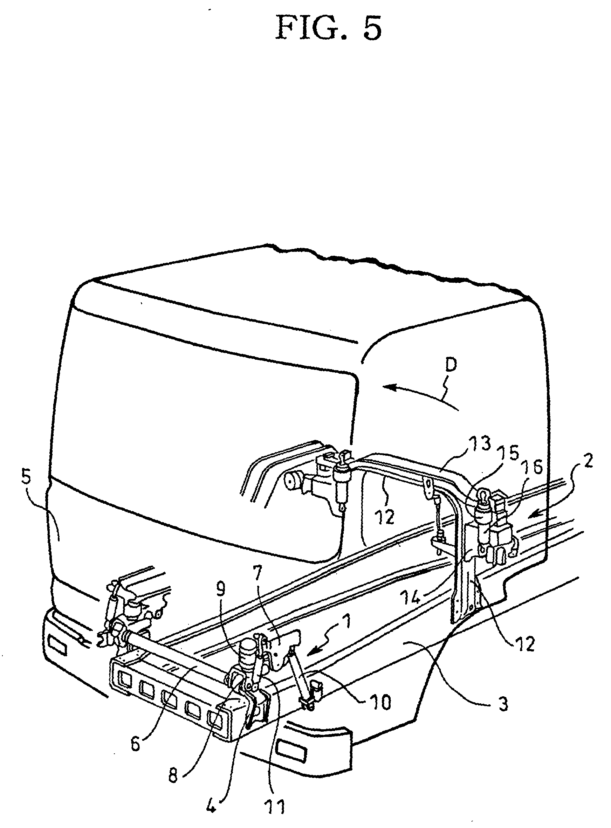

In Fig. 5, reference numerals 1 and 2 denote front and rear suspension units, respectively.

The front suspension unit 1 comprises cab hinge brackets 4 to attached to opposite sides of a chassis 3. To the brackets 4, a horizontal shaft 6 is attached to tiltably support a cab. 5.

The cab 5 has tilt hinge brackets 7 attached to a lower surface of the cab. An air suspension 9 is arranged between the bracket 7 and a lever 8 which is mounted via the shaft 6 on an upper end of the bracket 4.

The chassis 3 has hydraulic cylinders 10 pivoted at their lower ends to opposite lower sides of the chassis. The hydraulic cylinder 10 has a piston rod pivoted at its upper end to the bracket 7.

In the figure, reference numeral 11 represents a shock absorber.

The rear suspension unit 2 comprises a rear arch 12 which is inverted-U shaped when seen from forward or backward of the vehicle and which is attached at its opposite sides to the chassis 3. A floating bar 13 attached to a back surface of the cab 5 has a cab locking mechanism (not shown) so that, when the cab 5 is not tilted, the cab 5 can be kept in a predetermined horizontal state and locked to the rear arch 12.

Brackets 14 are attached to opposite outer side surfaces of the arch 12, and air suspensions 15 are arranged between the brackets 14 and opposite ends of the bar 13 laterally of the vehicle, respectively.

In the figure, reference numeral 16 represents a shock absorber. A minute gab is provided between a lower surface of the bar 13 and the upper surface of the arch 12 so that the air suspensions 9 and 15 can flexibly support the cab 5 and the shock absorbers 11 and 16 can readily absorb any shock.

When the cab 5 is to be tilted, the cab locking mechanism is operated to release locking of the cab 5 to the arch 12, and the hydraulic cylinders 10 are operated to expand their piston rods. As a result, the cab 5 is moved in counterclockwise direction D in Fig. 5 about the shaft 6, whereby tilting of the cab is carried out.

When the cab 5 is not tilted, the cab 5 is locked by the cab locking mechanism to the arch 12 and is at the position shown in Fig. 5. As a result, the cab 5 is flexibly supported by the air suspensions 9 and 15 and any shock applied on the vehicle is absorbed by the shock absorbers 11 and 16.

### (Problems to be Solved by the Invantion)

Since the cab 5 is pivoted to the chassis 3 via the shaft 6 and the brackets 4, any vertical vibration of the vehicle will cause the cab 5 to be moved as if it draws an arc about the shaft 6, resulting in pitching of the cab. When any vibration is applied to the cab 5 from road surface during running of the vehicle, vibration is felt, at positions of occupants such as a driver, as extensive vibratory movement in forward and backward directions due to the pitching of the cab 5. This impairs feeling of the occupants and adversely affects comfortableness.

In view of the above, the present invention has its object to provide a cab suspension structure which prevents pitching of a cab and reduce any vibration in forward and backward directions so as to attain comfortableness for occupants such as a driver in the cab.

### (Means or Measures for Solving the Problems)

The present invention provides a cab suspension structure comprising a horizontal shaft fitted to a cab hinge bracket on a chassis to tiltably support a cab, characterized in that said horizontal shaft fixed to said cab hinge bracket is connected to a horizontal pin fitted to a tilt hinge bracket on the cab through a first link body, line interconnecting a center of said horizontal shaft and a center of said horizontal pin declining toward backward of a vehicle when the cab is kept horizontal, and that a horizontal pin fitted to a bracket attached to a rear arch on said chassis is connected to a horizontal pin fitted to a bracket attached to a floating bar on a back surface of said cab through a second link body, line interconnecting a center of said horizontal pin and a center of said horizontal pin declining toward backward of the vehicle when the cab is kept horizontal, whereby a parallelogram linkage is provided by said first and second link bodies.

Therefore, according to the ivnention, no pitching of the cab to the chassis occurs, which reduces any vibration in forward and backward directions at positions of the occupants in the cab and contributes to improvement of comfortableness of the occupants in the cab and to alleviation of fatigue caused by driving operation.

Moreover, a bush may be provided for each of the pivots, which further drastically absorbs the vibration and further improves comforableness and remarkably alleviates fatigue of the occupants.

### (Brief description of the drawings)

An embodiment of the invention will be described in conjunction with the attached drawings.
- Fig. 1: is a side view illustrating a principle of cab movement in a cab suspension structure according to the invention;
- Fig. 2: is a side view showing a structure of a front portion of the cab suspension structure according to the invention;
- Fig. 3: is a side view showing a structure of a rear portion of the cab in the cab suspension structure according to the invention;
- Fig. 4: is a perspective view of a cab suspension structure shown in Fig. 3; and
- Fig. 5: is a perspective view of a conventional cab suspension structure.

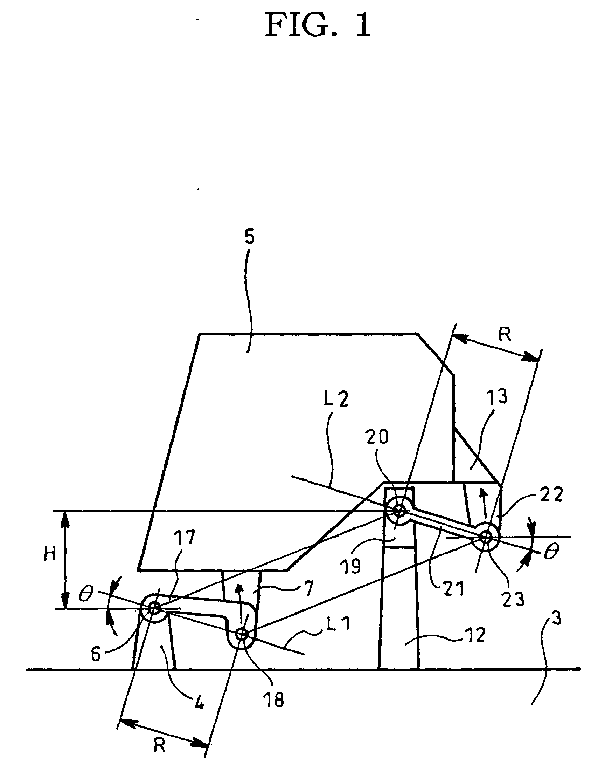

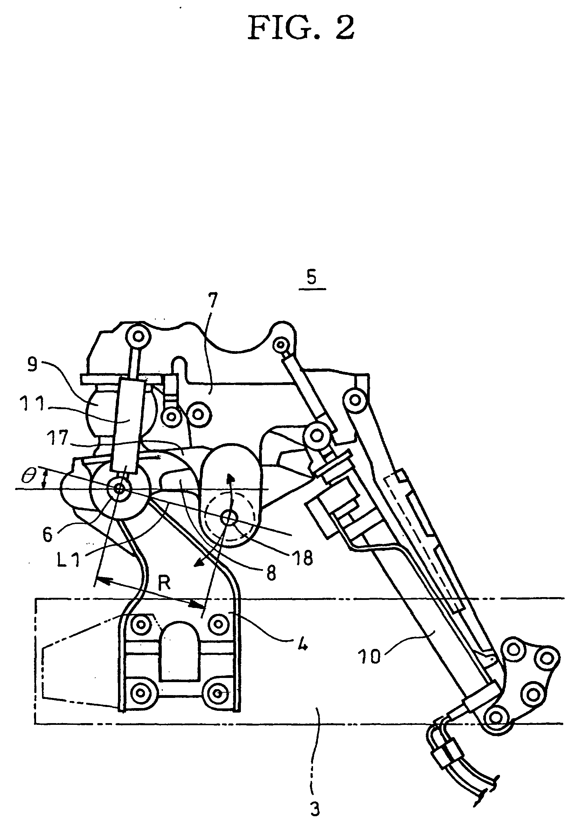

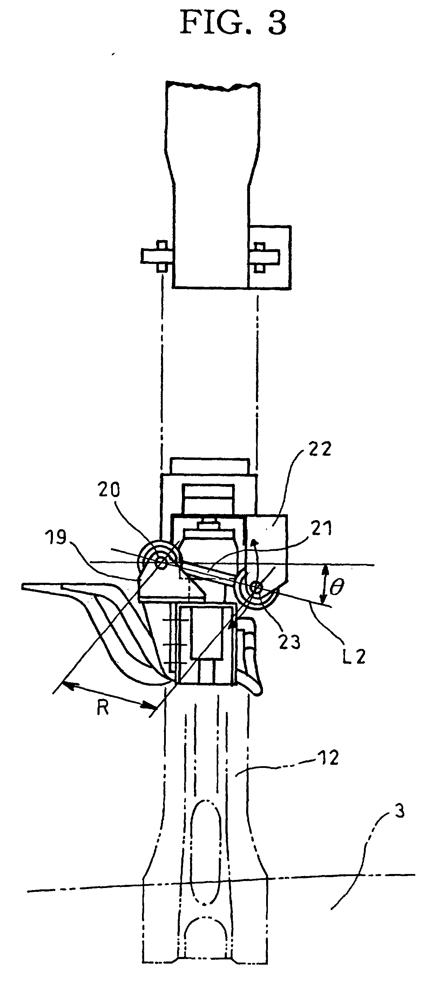

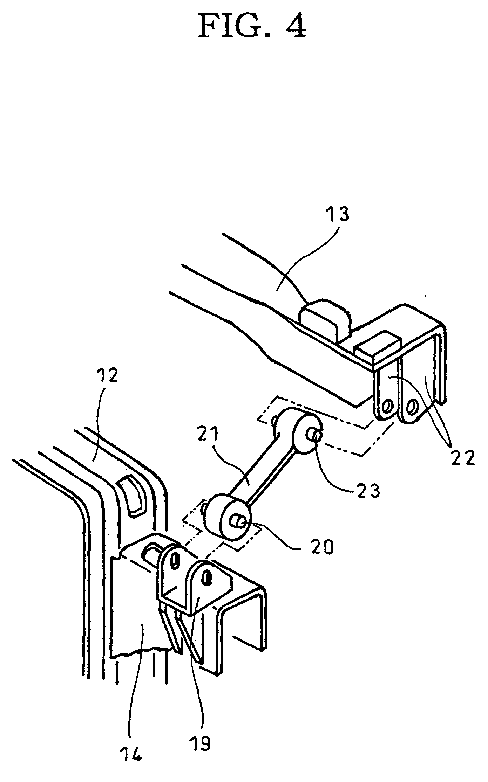

Figs 1 to 4 represent an embodiment of the invention. Fig. 1 is a side view illustrating a principle of cab movement in a cab suspension structure according to the invention; Fig. 2 is a side view showing details of the cab suspension structure on a front portion of a cab; and Figs. 3 and 4 are side and perspective views showing details of the cab suspension structure on a rear portion of the cab, respectively.

A horizontal shaft 6 at the front portion of the cab 5 is attached to a chassis 3 through cab hinge brackets 4. Each of front link levers 17 is pivoted at its one end over the shaft 6 and is pivoted at its other end, through a horizontal pin 18 in parallel with the shaft 6, to a tilt hinge bracket 7 which in turn is attached to a lower surface of the cab 5.

As a result, the pivot of the lever 17 with respect to the shaft 6 is located forward in comparison with the pivot of the lever 17 with respect to the pin 18. Straight line L1 interconnecting centers of the shaft 6 and pin 18 declines from forward to backward of the vehicle.

Here, distance between the centers of the shaft 6 and pin 18 is R and the line L1 is tilted by angle θ to the horizontal.

Brackets 14 are attached to opposite sides of a rear arch 12 at a rear portion of the cab 5. Attached to each of the brackets 14 is a further bracket 19 to which a control link 21 is pivoted at its one end via a horizontal pin 20 which is in parallel with the shaft 6.

A floating bar 13 is attached to a back surface of the cab 5. Brackets 22 are attached to opposite end of the floating bar 13 laterally of the vehicle, respectively. The other end of the link 21 is pivoted to the corresponding bracket 22 via a horizontal pin 23 which is in parallel with the pin 20.

As a result, the pivot of the link 21 with respect to the pin 20 is located forward in comparison with the pivot of the link 21 with respect to the pin 23. Straight line L2 interconnecting the pins 20 and 23 declines from forward to backward of the vehicle. The pin 20 is at a position higher by height H than the shaft 6.

Distance between the centers of the pins 20 and 23 is R and the line L2 is tilted by angle e to the horizontal.

A parallelogram is formed by interconnecting the centers of the shaft 6, the pins 18, 23 and 20 and the shaft 6; each parallelogram linkage is provided by each set of lever 17 and link 21.

Preferably, a bush is provided for each of the fitted portions between the shaft 6 and pin 18 and the front and rear ends of the lever 17, respectively, and between the pins 20 and 23 and the front and rear ends of the link 21, respectively, so as to obtain spring effect. The bush may be of a liquid sealed type.

In Figs. 1 to 4, the same components as those in Fig. 5 are referred to by the same reference numerals.

Next, mode of operation of the invention will be described.

During running of the vehicle along a road, any vertical force applied to the vehicle from road surface causes the cab 5 to be reciprocally moved in vertical and horizontal directions about the shaft 6 and pins 20 via the levers 17 and links 21. Because of the parallelogram linkages provided by the levers 17 and links 21, the cab 5 is not vertically tilted (pitched) about the shaft 6 as in the case of the prior art, but is displaced vertically and horizontally while being kept horizontal.

As a result, since no pitching of the cab 5 to the chassis 3 occurs, vibration in forward and backward directions is decreased at the position of the driver and other occupants in the cab 5. Moreover, since the link levers 17 and 21 are designed to decline from forward toward backward of the vehicle, the cab 5 is moved diagonally in upper rear direction due to the declination of the link levers 17 and 21 when the vehicle passes over some projection of the road surface, which reduces any impact to push up the occupants in the cab 5 and also decreases speed change in forward and backward directions of the vehicle. This will improve comfortableness of the occupants in the cab, resulting in alleviation of fatigue caused by the driving operation.

Furthermore, provision of a bush with spring effect to each of the fitted portions between the shaft 6 and pin 18 and the front and rear ends of the lever 17, respectively, and between the pins 20 and 23 and the front and rear ends of the link 21, respectively, eliminates any transmission of the vibration from the chassis 3 to the cab 5 in forward and backward directions of the vehicle, resulting in further improvement of the comfortableness of the occupants.

When the cab 5 is to be tilted in this embodiment, the control link 21 must be unlocked at the pin 20 or 23.

### (Effects of the Invention)

Various superb effects and advantages can be obtained according to the cab suspension structure of the invention. For example, in both of claims 1 sand 2, no pitching of the cab occurs so that vibration in forward and backward directions at the positions of the occupants in the cab can be decreased. Moreover, since the first and second link bodies are designed to decline from forward toward backward of the vehicle, the cab is moved diagonally in upper rear direction due to the declination of the 1 ink bodies when the vehicle passes over some projection on the road surface, which reduces any impact to push up the occupants in the cab and also decreases speed change in forward and backward directions of the vehicle. This will improve comfortableness of the occupants in the cab, resulting in alleviation of fatigue caused by the driving operation. In claim 2, further improvement of comfortableness and thus remarkable alleviation of fatigue is obtained.

### (Legend of Reference Numerals and Symbols)

- 3: chassis
- 4: cab hinge bracket
- 5: cab
- 6: horizontal shaft
- 7: tilt hange bracket
- 12: rear arch
- 13: floating bar
- 17: front link lever (first link body)
- 19: bracket
- 21: control link (second link body)
- 22: bracket
- L1, L2: straight line

## Claims

1. A cab suspension structure comprising a horizontal shaft (6) fitted to a cab hinge bracket (4) on a chassis (3) to tiltably support a cab (5), **characterized in that** said horizontal shaft (6) fixed to said cab hinge bracket (4) is connected to a horizontal pin (18) fitted to a tilt hinge bracket (7) on the cab (5) through a first link body (17), line interconnecting a center of said horizontal shaft (6) and a center of said horizontal pin (18) declining toward backward of a vehicle when the cab (5) is kept horizontal, and that a horizontal pin (20) fitted to a bracket (19) attached to a rear arch (12) on said chassis (3) is connected to a horizontal pin (23) fitted to a bracket (22) attached to a floating bar (13) on a back surface of said cab (5) through a second link body (21), line interconnecting a center of said horizontal pin (20) and a center of said horizontal pin (23) declining toward backward of the vehicle when the cab (5) is kept horizontal, whereby a parallelogram linkage is provided by said first and second link bodies (17, 21).

2. A structure according to claim 1 wherein a bush is provided for each of the pivots.

## Patentansprüche

1. Aufhängung mit einer horizontalen Achse (6), die an einer Fahrerhaus-Gelenkkonsole (4) an einem Chassis (3) angebracht ist, um das Fahrerhaus (5) kippbar zu tragen,
**dadurch gekennzeichnet,**
**dass** die an der Fahrerhaus-Gelenkkonsole (4) befestigte horizontale Achse (6) mit einem horizontalen Stift (18) verbunden ist, der mittel eines ersten Gelenkkörpers (17) an einer kippbaren Gelenkkonsole (7) am Fahrerhaus (5) angebracht ist, der in Linie ein Zentrum der horizontalen Achse (6) und ein Zentrum des horizontalen Stiftes (18) zur Rückseite eines Fahrzeuges hin abfallend verbindet, wenn das Fahrerhaus (5) sich in horizontaler Position befindet, und dass ein horizontaler Stift (20) der an einer Konsole (19) angebracht ist, die an einem rückseitigem Bogen (12) des Chassis (3) angebracht ist, mit einem horizontalen Stift (23) mittels eines zweiten Gelenkkörpers (21) verbunden ist, der an einer Konsole (22) angebracht ist, die an einem Stützbalken (13) angebracht ist, der an einer Rückseite des Fahrerhauses (5) vorgesehen ist, wobei . der zweite Gelenkkörper (21) in Linie ein Zentrum des horizontalen Stiftes (20) und ein Zentrum des horizontalen Stiftes (23) zur Rückseite des Fahrzeuges hin abfallend verbindet, wenn das Fahrerhaus (5) sich in horizontaler Position befindet, wobei der erste und der zweite Gelenkköper (17, 21) ein Parallelogrammgestänge bilden.

2. Aufhängung nach Anspruch 1, wobei jeder Drehpunkt eine Lagerbuchse aufweist.

## Revendications

1. Une structure de suspension pour cabine de conducteur, comprenant un arbre horizontal (6) adapté à un support de pivotement de cabine (4) sur un châssis (3) en vue de supporter de façon basculante une cabine (5), **caractérisée en ce que** ledit arbre horizontal (6) fixé au dit support de pivotement de cabine (4) est relié à une cheville horizontale (18) adaptée à un support de pivot de basculement (7) sur la cabine (5) par l'intermédiaire d'un premier corps de liaison (17), une ligne reliant un centre dudit arbre horizontal (6) et un centre de ladite cheville horizontale (18) descendant vers l'arrière d'un véhicule quand la cabine (5) est maintenue horizontale, et **en ce qu'**une cheville horizontale (20) adaptée à un support (19) fixé à un arceau arrière (12) sur ledit châssis (3) est relié à une cheville horizontale (23) adaptée à un support (22) monté sur une barre flottante (13) sur une surface postérieure de ladite cabine (5) par l'intermédiaire d'un second corps de liaison (21), une ligne reliant un centre de ladite cheville horizontale (20) et un centre de ladite cheville horizontale (23) descendant vers l'arrière du véhicule quand la cabine est maintenue horizontale, de manière telle qu'une liaison par parallélogramme est créée par lesdits premier et second corps de liaison (17, 21).

2. Une structure selon la revendication (1), dans laquelle une bague est prévue pour chacun des pivots.
